# EUROPEAN PATENT APPLICATION

(11) **EP 2 757 842 A1**
(43) Date of publication of application: **23.07.2014**
(21) Application number: 13151522.3
(22) Date of filing: 16.01.2013
(51) Int. Cl.: H04W 68/00

(54) **Method for controlling transmission of a paging message to a mobile communication equipment in idle mode, in presence of RANS implementing different RATS**

(71) Applicant: Alcatel Lucent, 75007 Paris (FR)
(72) Inventor: Godin, Philippe, 91620 Nozay (FR)
(74) Representative: Camus, Olivier Jean-Claude

(57) **Abstract**

A radio network controller (RNC1) equips a first radio access network (RAN1) implementing a first radio access technology and coupled to first cells (C1) and to second radio network controller(s) (RNC2) belonging to a second radio access network (RAN2) implementing a second radio access technology, and coupled to second cells (C2). This radio network controller (RNC1) is arranged, when it receives a paging message to be sent to a mobile communication equipment (CE) recently connected to it, i) for determining identifiers of second cells (C2) located in the radio vicinity of its first cells (C1), ii) for transmitting this paging message with the identifiers to each second radio network controller (RNC2) coupled to an identified second cell (C2), so that it diffuses it into each of its identified second cells (C2), and iii) for diffusing the paging message into at least a chosen first cell (C1) coupled to it.

## Description

### Technical field

The present invention relates to transmission of a paging message to a mobile communication equipment when two radio access networks (or RANs) implementing different radio access technologies (or RATs) are coupled together.

One means here by "paging message" a message that is transmitted by a radio access network to a mobile communication equipment coupled to it, when it is the addressee of an incoming call.

### Background of the invention

The number of telecommunication systems comprising at least two radio access networks (or RANs) implementing different radio access technologies (or RATs), keeps on increasing. This notably occurs each time a first RAT (such as LTE ("Long Term Evolution")) is progressively deployed to replace or complete a second RAT (such as UMTS, GSM, GPRS, EDGE, or CDMA).

An inter-RAT telecommunication systems comprises at least a first radio access network which implements a first radio access technology and comprises at least one first radio network controller coupled to at least one first cell, and a second radio access network which implements a second radio access technology and comprises at least one second radio network controller coupled to at least one second cell.

During the deployment phase of the first RAT, a lot of first cells have a radio coverage that overlaps partially the coverage of at least one second cell, or is fully included into the coverage of a second cell, which increases a lot the overall inter-RAT signaling in the network. This issue is still more relevant during the first steps of the deployment phase of the first RAT because the first radio coverage appears to be spotty but not continuous, and therefore once a mobile communication equipment enters in idle mode it is very difficult to estimate the cell in the radio coverage of which it can be joined. More, the last radio network controller of a radio access network to which the mobile communication equipment has been connected before entering in idle mode is unknown from the other radio access network.

So, each paging message intended for this mobile communication equipment in idle mode must be diffused in a great number of first and second cells (designated in a first list of one or several concerned tracking areas and in a second list of one or several concerned location areas), which often leads to an overhead of paging channels. This radio paging overhead is all the more damageable that in a vast majority of cases the concerned mobile communication equipment is simply located in one of the few neighbour cells of the last serving cell (where it was last connected) or of the last serving radio network controller. For instance, if the mobile communication equipment was last connected in a LTE cell when it became idle, the probability of having a successful paging of this mobile communication equipment in an area corresponding to the "umbrella" UMTS cell comprising this LTE cell could be above 70 %.

### Summary of the invention

So, the invention aims notably at optimizing the transmission of paging messages in the context of inter-RAT.

To this effect the invention notably provides a method, intended for controlling transmission of a paging message to a mobile communication equipment that has been recently connected to a first radio access network implementing a first radio access technology and comprising at least one first radio network controller coupled to at least one first cell and, through a chosen interface, to at least one second radio network controller belonging to a second radio access network implementing a second radio access technology, and coupled to at least one second cell. This method comprises:
- a step (i) during which, when a paging message must be sent to the mobile communication equipment, a core network node, coupled to the first radio access network, determines a last first radio network controller to which this mobile communication equipment was connected, and this last first radio network controller determines an identifier of at least one second cell located in the radio vicinity of at least one first cell coupled to this last first radio network controller, and the latter transmits this paging message with each determined identifier to each second radio network controller coupled to a second cell having a determined identifier, and
- a step (ii) during which this last first radio network controller diffuses the paging message into at least a chosen first cell coupled to it, and each second radio network controller having received the paging message diffuses it into each second cell that is coupled to it and whose identifier has been received with the paging message.

The method according to the invention may include additional characteristics considered separately or combined, and notably:
- in step (i) the core network node, coupled to the first radio access network, may determine the last first radio network controller, and then may transmit the paging message with chosen additional information to this last first radio network controller, so that the latter one determines the identifier of each second cell located in the radio vicinity of at least one first cell coupled to it, and then transmits the paging message with each determined identifier to each second radio network controller coupled to a second cell having a determined identifier;
   ➢ each additional information may be chosen from a group comprising at least parameter(s) of a core network coupled to the second radio access network, an optimization flag, and an identifier of at least one first cell of the last first radio network controller to which the mobile communication equipment has been recently connected;
- in step (i), in the case where the paging message does not comprise any first cell identifier, the last first radio network controller may determine the identifier of each chosen first cell in which the paging message must be diffused and from the radio vicinity of which at least one second cell can be identified;
- in a first embodiment, the first radio access technology may be LTE and the second radio access technology may be UMTS;
   ➢ in step (i) the last first radio network controller may be an evolved Node B determined by a mobility management entity coupled to the first radio access network, and in step (ii) this evolved Node B may transmit the paging message with the second cell identifier(s) to at least one UTRAN radio network controller defining a second radio network controller and coupled to it through the chosen interface;
- in a second embodiment, the first radio access technology may be UMTS and the second radio access technology may be LTE;
   ➢ in step (i) the last first radio network controller may be determined by a node of an UMTS core network coupled to the first radio access network. In this case, in step (ii) the last first radio network controller may transmit the paging message with the second cell identifier(s) to at least one evolved Node B defining a second radio network controller and coupled to it through said chosen interface.

The invention also provides a radio network controller intended for equipping a first radio access network implementing a first radio access technology and coupled to at least one first cell and, through a chosen interface, to at least one second radio network controller belonging to a second radio access network implementing a second radio access technology, and coupled to at least one second cell. This radio network controller is arranged, when it receives a paging message to be sent to a mobile communication equipment that has been recently connected to it:
- for determining an identifier of at least one second cell located in the radio vicinity of at least one first cell coupled to it,
- for transmitting the received paging message with each determined identifier to each second radio network controller coupled to a second cell having a determined identifier, so that the latter one diffuses this paging message into each second cell coupled to it and whose identifier has been received with the paging message, and
- for diffusing the paging message into at least a chosen first cell coupled to it.

For instance, this radio network controller may be also arranged, in the case where the received paging message does not comprise any identifier of a first cell, for determining the identifier of each chosen first cell in which the paging message must be diffused and from the radio vicinity of which at least one second cell can be identified.

### Brief description of the figures

Other features and advantages of the invention will become apparent on examining the detailed specifications hereafter and the appended drawings, wherein:
- figure 1 schematically and functionally illustrates a part of a telecommunication system comprising first and second radio access networks, implementing first and second radio access technologies and coupled together,
- figure 2 schematically illustrates a first example of sequence diagram intended for allowing transmission to a mobile communication equipment of a paging message originating from a core network node coupled to the first radio access network of figure 1, and
- figure 3 schematically illustrates a second example of sequence diagram intended for allowing transmission to a mobile communication equipment of a paging message originating from a core network node coupled to the second radio access network of figure 1.

### Detailed description of the preferred embodiment

The appended drawings may serve not only to complete the invention, but also to contribute to its understanding, if need be.

The invention aims, notably, at offering a method, and an associated radio network controller RNCj, intended for controlling transmission of a paging message to a mobile communication equipment CE entered into an idle mode after having been connected to a first RAN1 (respectively second RAN2) radio access network further coupled to a second RAN2 (respectively first RAN1) radio access network.

In the following description it will be considered that the first radio access network RAN1 implements a first radio access technology that is LTE (4G) and the second radio access network RAN2 implements a second radio access technology that is UMTS (3G). But the invention is not limited to this combination of RANs. Indeed it concerns any combination of at least two RANs implementing different radio access technologies (or RATs). So, the second RAT could be also GSM, GPRS, EDGE or CDMA, for instance.

Moreover, in the following description it will be considered that the mobile communication equipment CE is a smart phone. But the invention is not limited to this type of mobile communication equipment. So, it could be also a traditional cellular phone, a laptop, an electronic tablet, a communicating machine or a personal digital assistant, for instance.

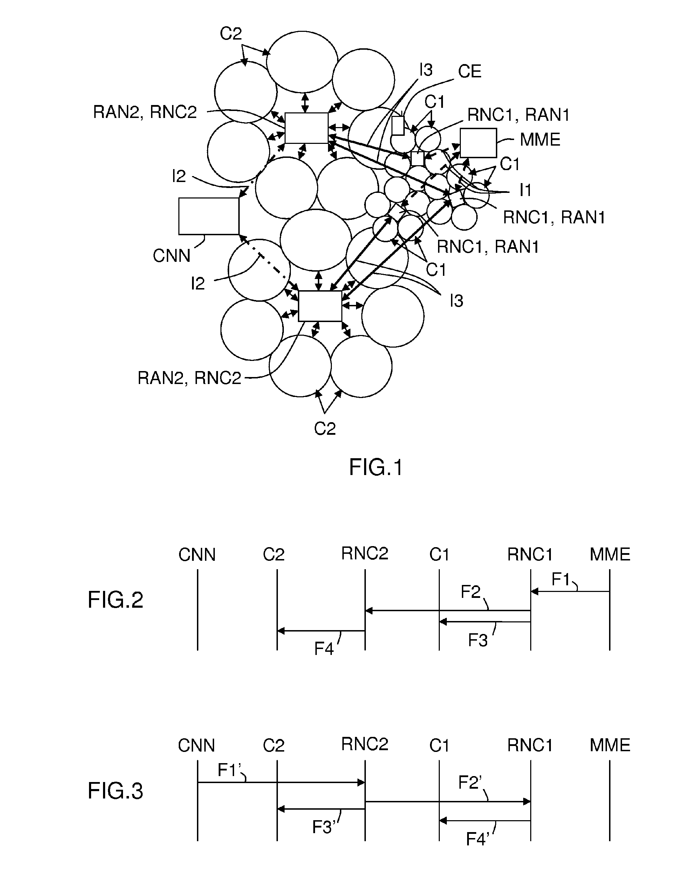

A part of a non-limiting example of telecommunication system is illustrated in figure 1. In this example, the telecommunication system comprises first RAN1 and second RAN2 radio access networks coupled together.

The first radio access network RAN1 implements a first radio access technology (here LTE) and comprises two first radio network controllers RNC1 that are each coupled to at least one first cell C1. This first radio access network RAN1 could comprise only one first radio network controller RNC1 or more than two first radio network controllers RNC1. Moreover, in this example each first radio network controller RNC1 is coupled to five first cells C1 (here LTE cells). But a first radio network controller RNC1 may be coupled to any number of first cells C1, as soon as this number is greater or equal to one. More, in this example, each first radio network controller RNC1 is an evolved Node B (or e-NB) that is coupled to a mobility management entity MME (which is a core network node) through a first interface I1 usually called S1-MME.

The second radio access network RAN2 implements a second radio access technology (here UMTS) and comprises two second radio network controllers RNC2 that are each coupled to at least one second cell C2. This second radio access network RAN2 could comprise only one second radio network controller RNC2 or more than two second radio network controllers RNC2. Moreover, in this example each second radio network controller RNC2 is coupled to six second cells C2 (here UMTS cells). But a second radio network controller RNC2 may be coupled to any number of second cells C2, as soon as this number is greater or equal to one. More, in this example, each second radio network controller RNC2 is coupled to a core network node CNN through a second interface I2 usually called lu.

Each first radio network controller (or e-NB) RNC1 is coupled to at least one second radio network controller RNC2 through a third interface I3.

The control method according to the invention can be implemented into a telecommunication system such as the one described above. It comprises at least two steps (i) and (ii).

A first step (i) is implemented each time a paging message must be sent to a mobile communication equipment CE entered into idle mode and which may have moved since its last connection to a cell C1 or C2.

During this first step (i), a node MME (or CNN) of the core network (coupled to the first radio access network RAN1) determines the last first radio network controller RNC1 to which the mobile communication equipment CE was connected, and this last first radio network controller RNC1 determines an identifier of at least one second cell C2 that is located in the radio vicinity of at least one of its first cells C1. Then, this last first radio network controller RNC1 transmits the paging message (to be transmitted to the mobile communication equipment CE), or any equivalent reformatted paging message, with each determined identifier to each second radio network controller RNC2 that is coupled to a second cell C2 whose identifier has been determined.

For instance, in the first step (i) it may be a node MME (or CNN) of the core network (coupled to the first radio access network RAN1) that determines the last first radio network controller RNC1. In the case where the first RAT is LTE, this last determination can be performed by the MME by any technic known from those skilled in the art. In the case where the first RAT is UMTS, this last determination can be performed by the UMTS core network CN by any technic known from those skilled in the art.

Then, once this determination has been performed, the node MME (or CNN) of the core network transmits the paging message with chosen additional information to the determined last first radio network controller RNC1, so that the latter one determines the identifier of each second cell C2 that is located in the radio vicinity of at least one of its first cells C1.

To determine the second cell identifier, the last first radio network controller RNC1 may use internal radio neighbour relation knowledge, which is not known by the core network (and more precisely by its node MME or CNN) but that it necessarily knows because it is used notably for handovers and is acquired, for instance, through ANR ("Automatic Neighbour Relation") and/or measurement reports and/or configuration phases.

One or more chosen additional information may be associated to a paging message before it is transmitted to the last first radio network controller RNC1. For instance, additional information may be parameter(s) of the core network CN (that is coupled to the second radio access network RAN2) such as IMSI or DRX cycle length coefficient, and/or an optimization flag (signalling that the last first radio network controller RNC1 will have to determine second cell identifier(s)), and/or an identifier of at least one first cell C1 of the last first radio network controller RNC1 to which the mobile communication equipment CE has been recently connected (if such an identifier can be determined). These examples of additional information are not limitative. Any other information useful to the last first radio network controller RNC1 for determining at least one first cell C1 (for instance the last serving first cell C1 where the mobile communication equipment CE was connected, or a list of first cells C1 with higher probability of successful paging) or any second cell C2 located into the vicinity of at least one of its first cells C1 can be added to a paging message to constitute an optimized paging message.

In the case where the paging message does not comprise any first cell identifier, the last first radio network controller RNC1 determines the identifier of each chosen first cell C1 in which the paging message must be diffused. This last determination of first cell identifier(s) can be performed by any technic known from those skilled in the art. If the last first radio network controller RNC1 does not succeed to determine a first cell identifier, then it chooses anyone of its first cells C1.

Once the second cell identifiers have been determined, the last first radio network controller RNC1 transmits the received paging message with each determined second cell identifier to each second radio network controller RNC2 that is coupled to a second cell C2 whose identifier has been determined. This transmission is performed through the third interface I3.

It is important to note that the last first radio network controller RNC1 may be arranged for adapting the received paging message in a format compatible with the third interface I3 or with a format of a UMTS interface (e.g. the lu interface or the lur interface).

In the second step (ii) of the control method, the last first radio network controller RNC1 diffuses the received paging message only into at least a chosen one of its first cells C1, and each second radio network controller RNC2 having received the paging message diffuses it only into each second cell C2 that is coupled to it and whose identifier has been received with this paging message.

In order to be capable of implementing a part of the method, a radio network controller RNCj (j = 1 or 2) must comprise additional software modules and/or additional hardware modules. In the same way, in order to be capable of implementing a part of the method, a MME must comprise at least additional software or memory modules.

An example of sequence diagram intended for controlling transmission to a mobile communication equipment CE of a paging message originating from the core network node MME that is coupled to the first radio access network RAN1 is illustrated in figure 2.

In a step F1, the MME determines the last first radio network controller RNC1, and possibly one or more first cells C1 of this last first radio network controller RNC1, and then transmits the paging message with chosen additional information to the determined last first radio network controller RNC1.

In a step F2, the last first radio network controller RNC1 determines the identifier of each second cell C2 that is located in the radio vicinity of at least one of its first cells C1, possibly after having determined the latter if it was not defined by the additional information associated to the received paging message, and then transmits the received paging message, with each determined second cell identifier to each second radio network controller RNC2 that is coupled to a second cell C2 whose identifier has been determined, through the third interface I3.

In a third step F3, the last first radio network controller RNC1 diffuses the received paging message only into at least a chosen one of its first cells C1, that it has determined or that was defined by the additional information associated to the received paging message.

In a fourth step F4, each second radio network controller RNC2 having received the paging message (F2) diffuses it only into each second cell C2 that is coupled to it and whose identifier has been received with this paging message.

It is important to note that, if the method according to the invention fails, the core network CN can perform a traditional paging over all cells C1 and C2 of concerned tracking areas and location areas.

It is also important to note that the invention also applies to a dual scenario of the one above described, i.e. a scenario where the paging message originates from the core network node CNN that is coupled the second radio access network RAN2 because the last radio network controller, to which the mobile communication equipment CE was connected, was a second one RNC2.

Such a dual scenario is similar to the other one if one considers that the first radio access technology is UMTS and the second radio access technology is LTE. In this case, in the first step (i) the last first radio network controller RNC1 may be determined by the UMTS core network CN (that is coupled to the first radio access network RAN1), and in the second step (ii) the last first radio network controller RNC1 may transmit the paging message with the second cell identifier(s) to at least one evolved Node B that defines a second radio network controller RNC2 and is coupled to it through the third interface I3.

In order to be capable of implementing a part of the method, the core network node CNN must comprise at least additional software modules.

An example of sequence diagram intended for controlling transmission to a mobile communication equipment CE of a paging message originating from the core network node CNN is illustrated in figure 3.

In a step F1', the core network node CNN may determine the last second radio network controller RNC2, and possibly one or more second cells C2 of this last second radio network controller RNC2, and then transmits the paging message with chosen additional information to the determined last second radio network controller RNC2.

In a step F2', the last second radio network controller RNC2 determines the identifier of each first cell C1 that is located in the radio vicinity of at least one of its second cells C2, possibly after having determined the latter if it was not defined by the additional information associated to the received paging message, and then transmits the received paging message (or an equivalent reformatted paging message), with each determined first cell identifier to each first radio network controller RNC1 that is coupled to a first cell C1 whose identifier has been determined, through the third interface I3.

In a third step F3', the last second radio network controller RNC2 diffuses the received paging message only into at least a chosen one of its second cells C2, that it has determined or that was defined by the additional information associated to the received paging message.

In a fourth step F4', each first radio network controller RNC1 having received the paging message (F2') diffuses it only into each first cell C1 that is coupled to it and whose identifier has been received with this paging message.

Compared to existing solutions where the paging is done over all UMTS cells of one or several concerned location areas and all LTE cells of one or several concerned tracking areas, the invention reduces dramatically the paging signaling overload because only few UMTS cells and LTE cells are paged instead of dozens of cells belonging to the locations areas and tracking areas where the mobile communication equipment is known to be located. For instance, considering only the UMTS part, if only one UMTS umbrella cell is paged around the last serving evolved Node B instead of paging a UMTS location area of 10 cells, the gain is in the order of a factor 10. More generally, the invention can ease the deployment of LTE cells into incumbent UMTS macro networks and can be seen as particularly relevant to back a strategy of densifying incumbent UMTS networks with LTE cells in a multi-vendor context.

The invention is not limited to the embodiments of method and radio network controller described above, only as examples, but it encompasses all alternative embodiments which may be considered by one skilled in the art within the scope of the claims hereafter.

## Claims

1. Method for controlling transmission of a paging message to a mobile communication equipment (CE) that has been recently connected to a first radio access network (RAN1) implementing a first radio access technology and comprising at least one first radio network controller (RNC1) coupled to at least one first cell (C1) and, through a chosen interface (I3), to at least one second radio network controller (RNC2) belonging to a second radio access network (RAN2) implementing a second radio access technology, and coupled to at least one second cell (C2), said method comprising a step (i) during which, when a paging message must be sent to said mobile communication equipment (CE), a core network node (MME; CNN), coupled to said first radio access network (RAN1), determines a last first radio network controller (RNC1) to which said mobile communication equipment (CE) was connected and said last first radio network controller (RNC1) determines an identifier of at least one second cell (C2) located in the radio vicinity of at least one first cell (C1) coupled to this last first radio network controller (RNC1), and the latter one (RNC1) transmits said paging message with each determined identifier to each second radio network controller (RNC2) coupled to a second cell (C2) having a determined identifier, and a step (ii) during which said last first radio network controller (RNC1) diffuses said paging message into at least a chosen first cell (C1) coupled to it, and each second radio network controller (RNC2) having received said paging message diffuses said paging message into each second cell (C2) coupled to it and whose identifier has been received with said paging message.

2. Method according to claim 1, wherein in step (i) the core network node (MME;CNN) coupled to said first radio access network (RAN1) determines said last first radio network controller (RNC1), and then transmits said paging message with chosen additional information to said last first radio network controller (RNC1), so that said last first radio network controller (RNC1) determines the identifier of each second cell (C2) located in the radio vicinity of at least one first cell (C1) coupled to it, and then transmits said paging message with each determined identifier to each second radio network controller (RNC2) coupled to a second cell (C2) having a determined identifier.

3. Method according to claim 2, wherein said additional information is chosen from a group comprising at least parameter(s) of a core network (CN) coupled to said second radio access network (RAN2), an optimization flag, and an identifier of at least one first cell (C1) of said last first radio network controller (RNC1) to which said mobile communication equipment (CE) has been recently connected.

4. Method according to one of claims 1 to 3, wherein in step (i), in the case where said paging message does not comprise any first cell identifier, said last first radio network controller (RNC1) determines the identifier of each chosen first cell (C1) in which said paging message must be diffused and from the radio vicinity of which at least one second cell (C2) can be identified.

5. Method according to one of claims 1 to 4, wherein said first radio access technology is LTE and said second radio access technology is UMTS.

6. Method according to claim 5, wherein in step (i) said last first radio network controller (RNC1) is an evolved Node B determined by a mobility management entity (MME) coupled to said first radio access network (RAN1), and in step (ii) said evolved Node B (RNC1) transmits said paging message with said second cell identifier(s) to at least one UTRAN radio network controller defining a second radio network controller (RNC2) and coupled to it through said chosen interface (I3).

7. Method according to one of claims 1 to 4, wherein said first radio access technology is UMTS and said second radio access technology is LTE.

8. Method according to claim 7, wherein in step (i) said last first radio network controller (RNC1) is determined by an UMTS core network node (CNN) coupled to said first radio access network (RAN1), and in step (ii) said last first radio network controller (RNC1) transmits said paging message with said second cell identifier(s) to at least one evolved Node B defining a second radio network controller (RNC2) and coupled to it through said chosen interface (I3).

9. Radio network controller (RNC1) intended for equipping a first radio access network (RAN1) implementing a first radio access technology and coupled to at least one first cell (C1) and, through a chosen interface (I3), to at least one second radio network controller (RNC2) belonging to a second radio access network (RAN2) implementing a second radio access technology, and coupled to at least one second cell (C2), wherein it is arranged, when it receives a paging message to be sent to a mobile communication equipment (CE) that has been recently connected to it, i) for determining an identifier of at least one second cell (C2) located in the radio vicinity of at least one first cell (C1) coupled to it, ii) for transmitting said received paging message with each determined identifier to each second radio network controller (RNC2) coupled to a second cell (C2) having a determined identifier, so that it diffuses said paging message into each second cell (C2) coupled to it and whose identifier has been received with said paging message, and iii) for diffusing said paging message into at least a chosen first cell (C1) coupled to it.

10. Radio network controller according to claim 9, wherein it is arranged, in the case where said received paging message does not comprise any identifier of a first cell (C1), for determining the identifier of each chosen first cell (C1) in which said paging message must be diffused and from the radio vicinity of which at least one second cell (C2) can be identified.
